Europäisches Patentamt

European Patent Office

Office européen des brevets

(19)

(11) Numéro de publication : **0 389 361 B1**

(12) # FASCICULE DE BREVET EUROPEEN

(45) Date de publication du fascicule du brevet :
09.12.92 Bulletin 92/50

(51) Int. Cl.$^5$ : **F22B 1/02**

(21) Numéro de dépôt : **90400764.8**

(22) Date de dépôt : **20.03.90**

(54) **Générateur de vapeur à préchauffage.**

(30) Priorité : **22.03.89 FR 8903750**

(43) Date de publication de la demande :
**26.09.90 Bulletin 90/39**

(45) Mention de la délivrance du brevet :
**09.12.92 Bulletin 92/50**

(84) Etats contractants désignés :
**BE CH DE ES GB LI SE**

(56) Documents cités :
**EP-A- 0 035 450**
**FR-A- 2 387 417**

(73) Titulaire : **FRAMATOME**
**Tour Fiat 1, Place de la Coupole**
**F-92400 Courbevoie (FR)**

(72) Inventeur : **Pascal, Yves**
**50 Square des Groues**
**F-92000 Nanterre (FR)**
Inventeur : **Dague, Gilles**
**259 Boulevard Pereire**
**F-75017 Paris (FR)**

(74) Mandataire : **Mongrédien, André et al**
**c/o BREVATOME 25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un générateur de vapeur à préchauffage, conçu pour être utilisé dans un réacteur nucléaire à eau pressurisée, tel que décrit dans le document FR-A-2 477 265 (& EP-A-0035 450). Dans ce document, il est décrit un générateur de vapeur dans lequel l'eau secondaire, généralement appelée eau alimentaire, est injectée par des tubes verticaux dans l'extrémité supérieure ouverte et évasée d'un espace d'alimentation de section semi-circulaire. Cet espace d'alimentation est formé entre une enveloppe intérieure entourant le faisceau de tubes en U du générateur et une jupe doublant extérieurement une partie de cette enveloppe entourant les branches des tubes dans lesquelles l'eau primaire redescend vers le collecteur d'évacuation de cette eau primaire. A cette eau alimentaire circulant de haut en bas dans l'espace d'alimentation se mélange une partie de l'eau, appelée eau de recirculation, sortant des séparateurs eau-vapeur situés à la partie supérieure de l'enveloppe intérieure de l'échangeur. Le reste de l'eau de recirculation s'écoule vers le bas entre l'enveloppe extérieure du générateur de vapeur et l'ensemble formé par l'enveloppe intérieure et la jupe.

Cette configuration permet d'assurer un préchauffage homogène de l'eau alimentaire par l'eau de recirculation, à l'intérieur de l'espace d'alimentation, avant que l'eau ne remonte dans l'enveloppe intérieure, le long des tubes du faisceau, pour se vaporiser à leur contact. Pour cette raison, l'espace d'alimentation est aussi appelé économiseur.

Dans un tel générateur de vapeur, les tubes d'alimentation par lesquels arrive l'eau alimentaire présentent habituellement la forme de J renversés. Par ailleurs, la jupe suit approximativement le contour de l'enveloppe extérieure du générateur, de telle sorte que sa partie supérieure est évasée pour donner à ce niveau à l'espace d'alimentation la forme d'un entonnoir. Compte tenu de ces formes particulières des tubes d'alimentation et de l'espace d'alimentation, et aussi en raison de la vitesse élevée des jets d'eau alimentaire sortant de ces tubes, des tourbillons peuvent se produire dans la partie supérieure de l'espace d'alimentation.

Ces tourbillons peuvent remonter au-dessus du tore d'alimentation sur lequel sont raccordés les tubes d'alimentation, et entraîner une quantité importante d'un mélange composé d'eau de recirculation (à saturation) et d'eau alimentaire. Une partie de ce mélange, à une température inférieure à la température de saturation, redescend alors par l'espace formé entre l'enveloppe extérieure du générateur et l'ensemble formé par l'enveloppe intérieure et la jupe. L'autre partie du mélange, à une température supérieure à la température de l'eau alimentaire, est injectée dans l'espace d'alimentation.

Ce phénomène a pour conséquence de diminuer l'efficacité du préchauffage du générateur de vapeur, ce qui peut entraîner une réduction de la pression dans le générateur de vapeur. La surface d'échange du générateur de vapeur n'est donc pas utilisée de façon optimale et le rendement thermique du générateur s'en trouve diminué.

L'invention a précisément pour objet un générateur de vapeur de conception générale analogue à celle qui est décrite dans le document FR-A-2 477 265, mais dont le rendement thermique est amélioré grâce à des perfectionnements empêchant la formation de tourbillons à la sortie des tubes d'alimentation.

Selon l'invention, ce résultat est obtenu au moyen d'un générateur de vapeur comportant une enveloppe extérieure de révolution, d'axe vertical, délimitant un espace intérieur divisé en une zone inférieure primaire et une zone supérieure secondaire par une plaque à tubes horizontale, une cloison verticale divisant la zone inférieure primaire en un collecteur d'admission et un collecteur d'évacuation de fluide primaire, un faisceau de tubes en U renversés placés dans la zone supérieure secondaire et raccordés sur la plaque à tubes de telle sorte que leurs extrémités débouchent respectivement dans les collecteurs d'admission et d'évacuation, une enveloppe intérieure coiffant le faisceau de tubes et dont un bord inférieur est éloigné de la plaque à tubes, une jupe entourant une partie de l'enveloppe intérieure située à la verticale du collecteur d'évacuation, de façon à délimiter avec l'enveloppe intérieure un espace d'alimentation en eau secondaire, ouvert vers le haut et communiquant à sa base avec un espace intérieur à l'enveloppe intérieure, cet espace intérieur communiquant avec une partie haute de la zone supérieure secondaire par des séparateurs eau-vapeur traversant une paroi supérieure de l'enveloppe intérieure, un dispositif d'alimentation en eau secondaire comportant des tubes d'alimentation débouchant en haut de l'espace d'alimentation, et un dispositif d'évacuation de vapeur secondaire traversant une paroi supérieure de l'enveloppe intérieure, caractérisé par le fait qu'il comprend des moyens anti-retour évitant que l'eau secondaire débouchant des tubes d'alimentation ressorte de l'espace d'alimentation au-dessus de la jupe.

Dans ce générateur de vapeur, les moyens anti-retour peuvent comprendre quatre structures différentes, éventuellement combinées. Ces structures sont :
- une plaque fixée sur l'enveloppe intérieure en face de la jupe, approximativement au niveau d'un bord supérieur de cette dernière, de façon à réduire à ce niveau la section de passage de l'espace d'alimentation en eau secondaire ;
- un prolongement de chacun des tubes d'alimentation, débouchant à un niveau sensiblement inférieur au niveau du bord supérieur de la jupe ;
- un tronçon d'extrémité terminant chacun des tubes d'alimentation et de plus grande section par rapport à une partie amont de ces tubes ; et
- un prolongement de la jupe vers le haut jusqu'à un niveau sensiblement supérieur à l'extrémité inférieure des tubes.

Différentes variantes de réalisation de l'invention vont à présent être décrites à titre d'exemple non limitatif, en se référant aux dessins annexés dans lesquels :

- la figure 1 est une vue en coupe verticale de la partie inférieure d'un générateur de vapeur sur lequel peuvent être montés les moyens anti-retour conformes à l'invention ;
- la figure 2 est une vue en coupe selon la ligne II-II de la figure 1 ;
- les figures 3 à 6 sont des vues en coupe schématique représentant à plus grande échelle le dispositif d'alimentation en eau alimentaire de l'espace d'alimentation du générateur de vapeur, selon quatre variantes de réalisation du dispositif anti-retour conforme à l'invention ;
- les figures 7 à 17 sont des vues comparables aux figures 3 à 6 illustrant les différentes combinaisons possibles des variantes de réalisation représentées sur ces dernières figures ; et
- la figure 18 est une vue comparable aux figures 3 à 17, illustrant la combinaison des variantes de réalisation des figures 3, 5 et 6, dans le cas où certaines modifications sont apportées à ces variantes.

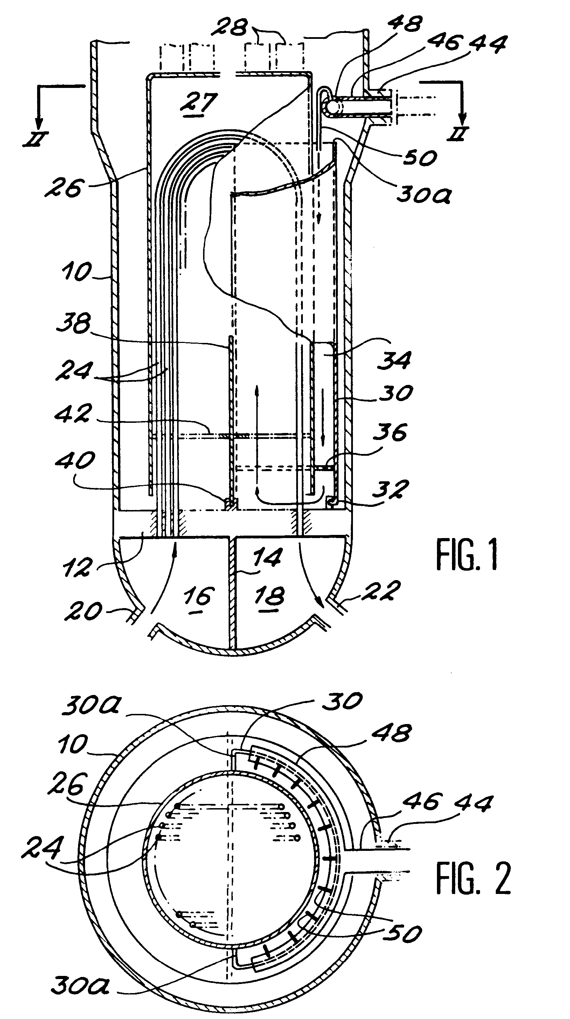

Sur les figures 1 et 2, la référence 10 désigne l'enveloppe extérieure de révolution, d'axe vertical, d'un générateur de vapeur prévu pour assurer le transfert de chaleur entre le circuit d'eau primaire et le circuit secondaire eau-vapeur d'un réacteur nucléaire à eau pressurisée. Cette enveloppe 10 délimite un espace intérieur clos qui est séparé en une zone inférieure primaire et une zone supérieure secondaire par une plaque à tubes horizontale 12 raccordée de façon étanche sur l'enveloppe 10.

Une cloison verticale 14 divise la zone inférieure primaire, habituellement appelée boîte à eau, en un collecteur d'admission 16 et un collecteur d'évacuation 18 de l'eau contenue dans le circuit primaire du réacteur. Des tubulures 20 et 22 soudées sur l'enveloppe extérieure 10 du générateur raccordent respectivement les collecteurs 16 et 18 à ce circuit primaire.

Un faisceau de tubes en U renversés 24 est raccordé de façon étanche sur la plaque à tubes 12, dans la zone supérieure secondaire délimitée par cette dernière, de telle sorte que les deux extrémités de chacun des tubes débouchent respectivement dans le collecteur d'admission 16 et dans le collecteur d'évacuation 18.

Le faisceau de tubes 24 est entouré et coiffé par une enveloppe intérieure 26 disposée coaxialement dans l'enveloppe extérieure 10. La paroi supérieure horizontale de cette enveloppe intérieure 26 est traversée par des séparateurs eau-vapeur 28 qui font communiquer l'espace 27 ménagé à l'intérieur de l'enveloppe 26 avec la partie haute de la zone supérieure secondaire délimitée à l'intérieur de l'enveloppe 10 par la plaque à tubes 12. Le bord inférieur de l'enveloppe intérieure 26 est placé à une distance déterminée au-dessus de la plaque à tubes 12, de façon à former un passage entre l'espace annulaire délimité entre les enveloppes 10 et 26 et l'espace 27 intérieur à l'enveloppe 26.

De plus, le générateur de vapeur selon l'invention comporte une jupe 30, de section semi-circulaire, qui entoure la partie de l'enveloppe intérieure 26 située à la verticale du collecteur d'évacuation 18 et dans laquelle sont placées les branches descendantes, appelées branches froides, des tubes 24. De façon plus précise, la jupe 30 est terminée à chacune de ses extrémités circonférentielles par deux cloisons radiales 30a (figure 2), qui sont raccordées de façon étanche sur l'enveloppe intérieure 26. La jupe 30 s'étend sur la majeure partie de la hauteur de l'enveloppe intérieure 26 et son bord inférieur est raccordé sur la plaque à tubes 12 par une liaison semi-étanche 32.

On délimite ainsi entre la jupe 30 et l'enveloppe intérieure 26 un espace d'alimentation ou économiseur 34 ouvert vers le haut et communiquant avec l'espace 27 par le passage formé entre le bord inférieur de l'enveloppe 26 et la plaque à tubes 12. Une plaque horizontale perforée 36 est raccordée à la fois sur l'enveloppe intérieure 26 et sur la jupe 30 dans la partie inférieure de l'espace 34, afin de contrôler le débit d'admission de l'eau alimentaire dans l'espace 27.

Dans la partie inférieure de l'espace 27 formé dans l'enveloppe intérieure 26, une plaque verticale 38 est placée dans le prolongement de la cloison 14, pour séparer les deux branches des tubes 24 du faisceau. La plaque 38 est montée sur la plaque à tubes 12 par une liaison semi-étanche 40, et elle s'élève approximativement à mi-hauteur dans l'espace 27. Cette plaque permet de canaliser l'eau alimentaire sortant de l'espace 34 le long des branches froides du faisceau de tubes 24, lorsque cette eau pénètre dans l'espace 27. Elle garantit ainsi un préchauffage suffisant de l'eau alimentaire avant que cette dernière ne s'écoule dans la totalité de l'espace intérieur 27, autour des tubes 24.

Dans la partie inférieure de l'espace 27 et de part et d'autre de la plaque verticale 38 est placée une plaque de distribution horizontale 42, qui est traversée par les tubes 24 et perforée de façon à assurer une répartition radiale sensiblement uniforme des vitesses d'écoulement de l'eau de bas en haut dans l'espace 27.

L'eau alimentaire est introduite dans la zone supérieure secondaire du générateur de vapeur par une tubulure 44 raccordée de façon étanche sur l'enveloppe extérieure 10, dans une partie supérieure de plus grand diamètre de cette dernière située à un niveau compris entre le bord supérieur 30a de la jupe 30 et la cloison supérieure de l'enveloppe intérieure 26. Cette tubulure 44 se prolonge à l'intérieur de l'enveloppe 10 par une conduite 46 qui débouche dans un collecteur torique 48, de forme approximativement semi-circulaire et située au-dessus de l'espace d'alimentation 34, comme l'illustre la figure 2. Des tubes 50 en forme de J renversés sont raccordés en haut du collecteur torique 48 et descendent selon une direction approximativement verticale, de telle sorte que leur extrémité inférieure débouche en haut de l'espace d'alimentation 34.

Pour compléter la description du générateur de vapeur, il est rappelé que la vapeur formée dans le dôme supérieur de l'enveloppe extérieure 10 est évacuée par une tubulure (non représentée).

Le fonctionnement général du générateur de vapeur qui vient d'être décrit en se référant aux figures 1 et 2 est identique à celui du générateur de vapeur décrit dans le document FR-A-2 477 265.

Ainsi, l'eau du circuit primaire s'écoule depuis le collecteur d'admission 16 jusqu'au collecteur d'évacuation 18 en passant dans les tubes 24. Simultanément, l'eau alimentaire admise par la tubulure 44 est injectée en haut de l'espace 34 par les tubes d'alimentation 50 et descend jusqu'en bas de l'espace 34, avant de remonter le long des branches froides des tubes 24 afin de se préchauffer. L'eau alimentaire préchauffée continue à circuler vers le haut dans l'espace 27 en se répartissant progressivement sur toute la section de ce dernier, jusqu'à atteindre sa température de vaporisation. La partie haute de l'espace 27 est donc remplie de vapeur, qui traverse les séparateurs eau-vapeur 28. La vapeur d'eau sortant de ces séparateurs quitte le générateur de vapeur par la tubulure formée à cet effet dans le dôme de l'enveloppe extérieure 10. Au contraire, l'eau de recirculation sortant des séparateurs 28 redescend dans l'espace annulaire formé entre l'enveloppe extérieure 10 et l'enveloppe extérieure 26, afin de revenir au contact des tubes 24 dans l'espace intérieur 27. Une partie de cette eau de recirculation se mélange à l'eau alimentaire injectée par les tubes d'alimentation 50 en haut de l'espace 34, pour en assurer le préchauffage.

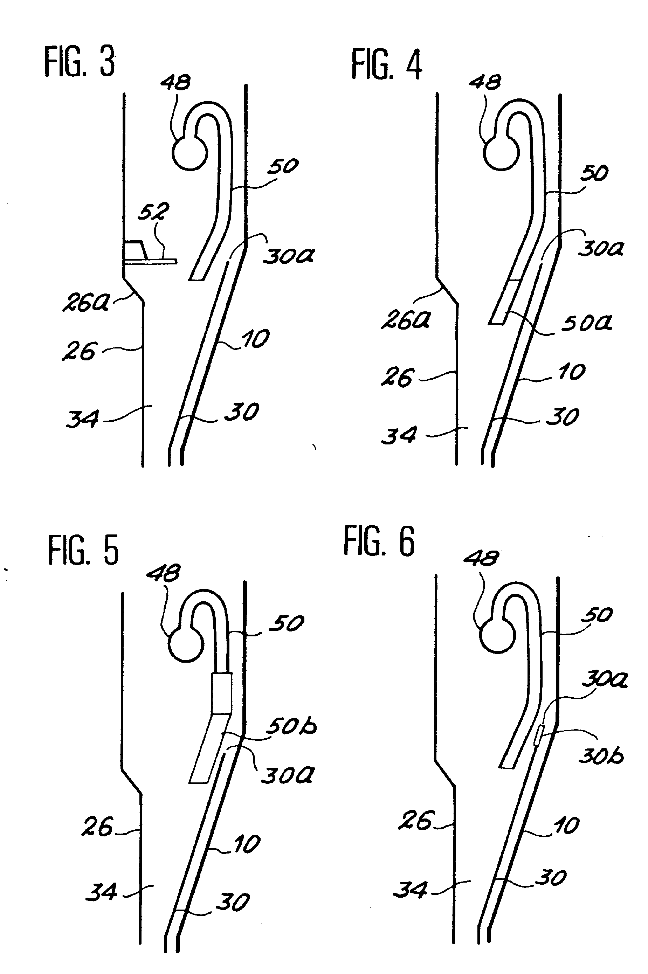

Dans la pratique et comme l'illustrent à plus grande échelle les figures 3 à 17, la partie haute de la jupe 30 présente une forme tronconique évasée vers le haut, afin de rester parallèle à l'enveloppe extérieure 10, qui présente à ce niveau une partie tronconique servant à raccorder une partie inférieure de relativement petit diamètre à une partie supérieure de relativement grand diamètre. De plus, l'enveloppe intérieure 26 présente également une partie tronconique 26a de faible hauteur, située à un niveau juste inférieur au bord supérieur 30a de la jupe 30, ce qui a pour effet d'accentuer l'effet d'évasement de l'espace 34 dans sa partie supérieure.

Par ailleurs, les tubes d'alimentation 50 passent entre le collecteur torique 48 et l'enveloppe extérieure 10, de telle sorte que leur partie inférieure doit être légèrement coudée vers l'intérieur du générateur de vapeur pour déboucher en haut de l'espace 34.

En raison de ces formes particulières de l'espace 34 et des tubes d'alimentation 50, et compte tenu de la vitesse d'écoulement élevée de l'eau alimentaire circulant dans les tubes 50, il peut se produire des tourbillons à la sortie de ces derniers. La formation de tels tourbillons est préjudiciable au bon fonctionnement du générateur de vapeur, car elle peut conduire à entraîner une partie de l'eau alimentaire sortant des tubes 50 en dehors de l'espace d'alimentation 34. Un tel fonctionnement aurait pour conséquence une diminution appréciable du rendement thermique du générateur.

Pour éviter la formation de tels tourbillons conduisant à un retour vers le haut de l'eau alimentaire, il est proposé selon l'invention de prévoir à ce niveau des moyens anti-retour de l'eau alimentaire. Ces moyens anti-retour peuvent prendre quatre formes différentes qui peuvent le cas échéant être combinées entre elles, comme le montre la description qui va suivre.

La figure 3 illustre une première variante de réalisation de l'invention, dans laquelle les moyens anti-retour comprennent une plaque horizontale 52 fixée de façon étanche sur l'enveloppe intérieure 26, approximativement au niveau du bord supérieur 30a de la jupe 30, et s'étendant sur toute la longueur circonférentielle de l'espace d'alimentation 34, c'est-à-dire approximativement sur un demi cercle. Cette plaque 52 a une largeur uniforme, au plus égale à environ la moitié de la largeur de l'espace 34 au niveau du bord supérieur 30a. Cette plaque 52 réduit ainsi la section de passage de l'espace d'alimentation 34 au niveau du bord 30a, ce qui a pour effet d'éviter le retour vers le haut de l'eau alimentaire.

La figure 4 illustre une deuxième variante de réalisation de l'invention, dans laquelle le dispositif anti-retour comprend un prolongement 50a de chacun des tubes 50, qui a pour effet de faire déboucher ces derniers à un niveau situé bien en-dessous du bord supérieur 30a de la jupe 30, et également en-dessous de la partie tronconique 26a de l'enveloppe intérieure 26. A titre d'exemple, le prolongement 50a de chacun des tubes 50 peut atteindre une longueur d'environ 700 mm, le diamètre de ce prolongement étant identique à celui des tubes 50.

Cette solution favorise l'écoulement de l'eau alimentaire à l'entrée de la partie de section uniforme de l'espace 34 située en dessous de la partie supérieure tronconique de la jupe 30. En étant ainsi canalisée bien en dessous du bord supérieur 30a de la jupe 30, l'eau alimentaire s'écoule en totalité dans l'espace 34 et son retour au-dessus du bord 30a est empêché.

La figure 5 illustre une troisième variante de réalisation de l'invention, dans laquelle les moyens anti-retour de l'eau alimentaire comprennent un tronçon tubulaire coudé 50b, de plus grand diamètre, constituant l'extrémité inférieure de chacun des tubes d'alimentation 50. A titre d'exemple, la section de la partie 50b peut être approximativement double de celle de la partie des tubes 50 située en amont.

Cette configuration donnée au tronçon d'extrémité des tubes 50 a pour effet de réduire, par exemple d'un facteur 2, les vitesses de sortie de l'eau alimentaire dans l'espace 34. Cela favorise un écoulement tranquille de l'eau alimentaire tendant à éliminer les phénomènes de tourbillons et, par conséquent, le retour de l'eau alimentaire au-dessus du bord supérieur 30a de la jupe 30.

Sur la figure 6, on a représenté une quatrième variante de réalisation de l'invention, dans laquelle les moyens empêchant le retour de l'eau alimentaire au-dessus du bord supérieur de la jupe 30 comprennent un prolongement 30b de cette jupe vers le haut, qui a pour conséquence de remonter le bord supérieur 30a approximativement au niveau de la jonction entre la partie intermédiaire tronconique et la partie supérieure de plus grand diamètre de l'enveloppe extérieure 10 du générateur.

Comme la variante de réalisation de la figure 2, cette variante de réalisation a pour effet de mieux canaliser l'eau alimentaire dans l'espace d'alimentation 34 et de maintenir le tourbillon pouvant se former à la sortie des tubes à un niveau inférieur à celui du bord supérieur 30a de la jupe 30. Tout retour de l'eau alimentaire au-dessus de ce bord supérieur est donc ici encore empêché.

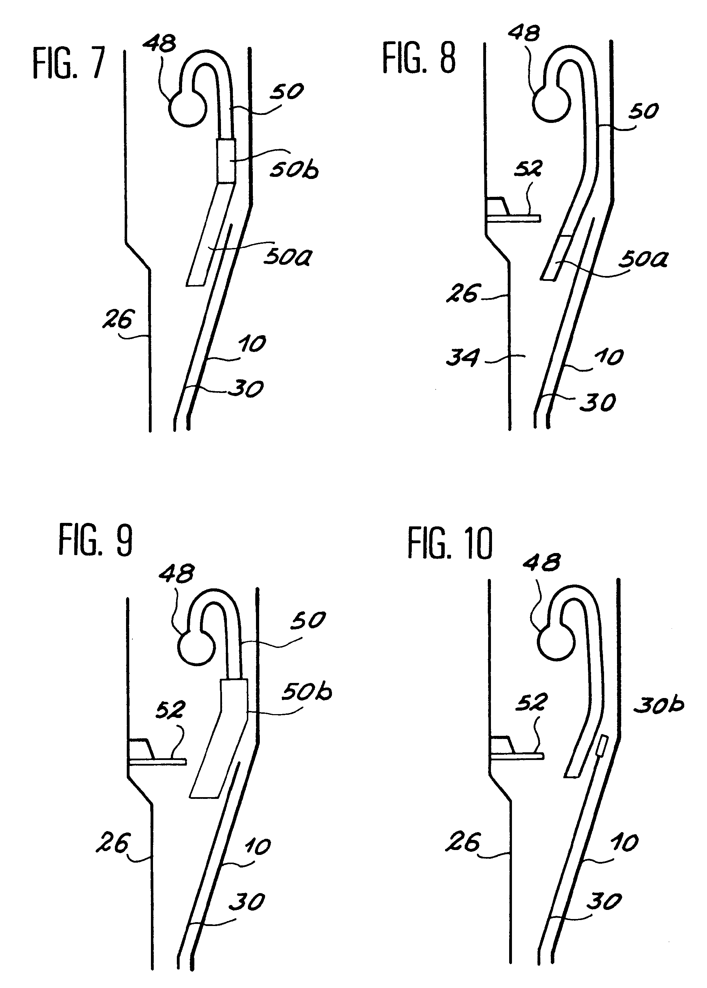

Comme on l'a déjà mentionné, les quatre variantes qui viennent d'être décrites en se référant aux figures 3 à 6 peuvent être avantageusement combinées entre elles, comme le montrent les figures 7 à 17.

Ainsi, la figure 7 illustre la combinaison des variantes des figures 4 à 5, dans laquelle les tubes d'alimentation 50 présentent à la fois une section d'extrémité 50b de plus grande section que la partie amont de ces tubes et un prolongement 50a de cette partie d'extrémité 50b.

La figure 8 illustre quant à elle la combinaison des variantes de réalisation des figures 3 et 4. Ainsi, on voit sur cette figure que le générateur de vapeur comporte à la fois une plaque horizontale 52 réduisant la section d'entrée de l'espace d'alimentation 34 et des prolongements 50a des tubes d'alimentation 50.

Sur la figure 9, les variantes de réalisation des figures 3 et 5 sont combinées, c'est-à-dire que le générateur de vapeur comprend à la fois la plaque horizontale 52 et que les tubes 50 comprennent chacun un tronçon d'extrémité de plus grande section 50b.

La figure 10 illustre quant à elle la combinaison des variantes des figures 3 et 6, dans lesquelles le générateur de vapeur comprend la plaque 52, la jupe 30 comportant un prolongement 30b vers le haut.

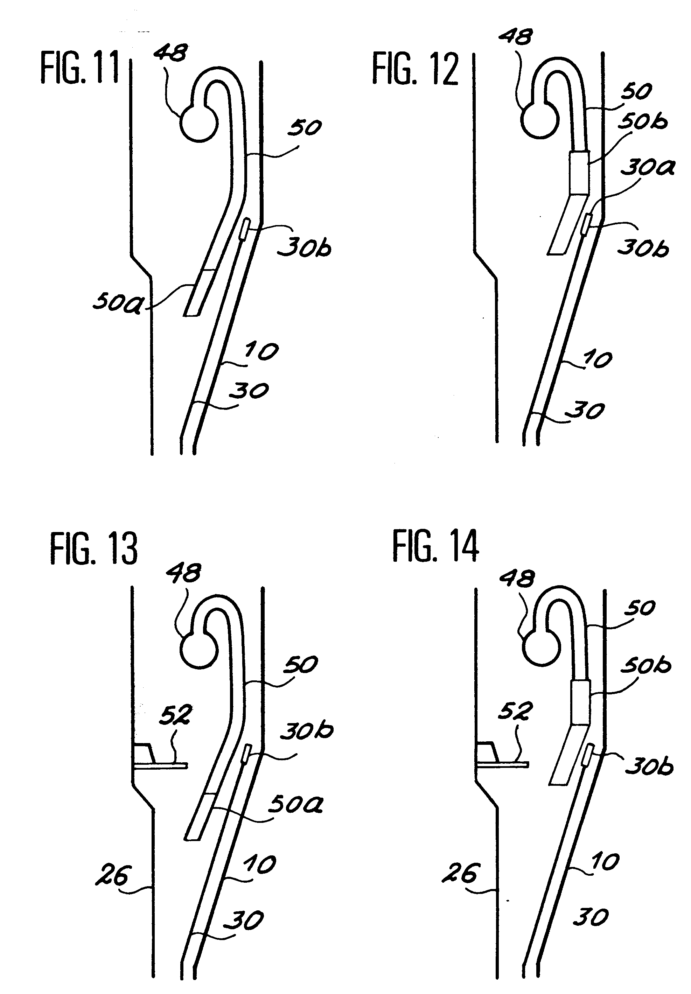

Sur la figure 11, la jupe 30 comporte également le prolongement 30b vers le haut et les tubes 50 comportent quant à eux un prolongement 50a vers le bas, c'est-à-dire que les variantes des figures 4 et 6 sont combinées.

Enfin, la figure 12 illustre le cas où le retour de l'eau alimentaire au-dessus du bord supérieur 30a de la jupe 30 est évité à la fois en équipant cette dernière d'un prolongement 30b vers le haut et en prévoyant sur chacun des tubes 50 un tronçon d'extrémité de plus grande section 50b, conformément aux variantes de réalisation des figures 5 et 6.

Sur les figures 13 à 16, on voit que trois des variantes de réalisation des figures 3 à 6 peuvent également être combinées pour éviter le retour de l'eau alimentaire au-dessus du bord supérieur 30a de la jupe 30.

Dans le cas de la figure 13, ce sont les variantes des figures 3, 4 et 6 qui sont combinées, c'est-à-dire que chacun des tubes 50 comporte un prolongement 50a vers le bas, que la jupe 30 comporte un prolongement 30b vers le haut, et qu'une plaque 52 est fixée sur l'enveloppe intérieure 26.

Sur la figure 14, les variantes de réalisation des figures 3, 5 et 6 sont combinées, c'est-à-dire que chacun des tubes 50 comporte un tronçon d'extrémité 50b de plus grande section, que la jupe 30 comporte un prolongement vers le haut 30b, et que l'enveloppe intérieure 26 supporte une plaque horizontale 52.

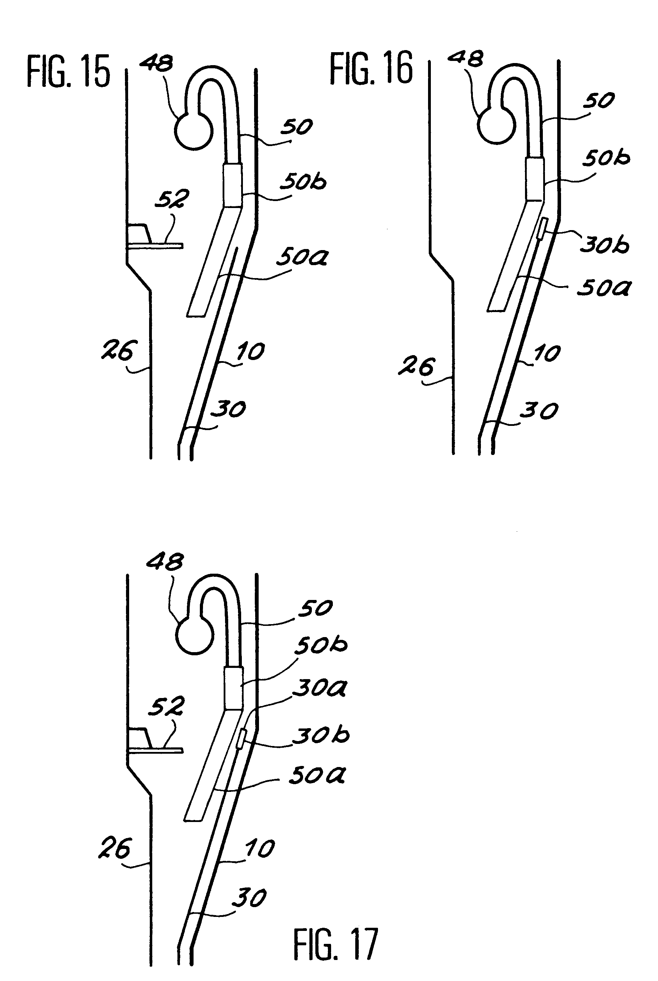

Sur la figure 15, on a représenté la combinaison des variantes de réalisation des figures 3, 4 et 5, c'est-à-dire que chacun des tubes 50 comporte à la fois un prolongement 50a vers le bas et un tronçon d'extrémité 50b de plus grande section, auquel appartient ce tronçon 50a. En outre, l'enveloppe intérieure 26 supporte ici encore une plaque horizontale 52.

Dans le cas de la figure 16, ce sont les variantes de réalisation des figures 4, 5 et 6 qui sont combinées, c'est-à-dire que, par rapport à la figure 15, la plaque 52 est supprimée et la jupe 30 comporte un prolongement 30b vers le haut.

La figure 17 illustre la combinaison des quatre variantes de réalisation des figures 3 à 6, c'est-à-dire que chacun des tubes 50 comporte à la fois un prolongement 50a et un tronçon de plus grande section 50b auquel appartient ce prolongement, que la jupe 30 comporte un prolongement vers le haut 30b et que l'enveloppe intérieure 26 supporte une plaque horizontale 52.

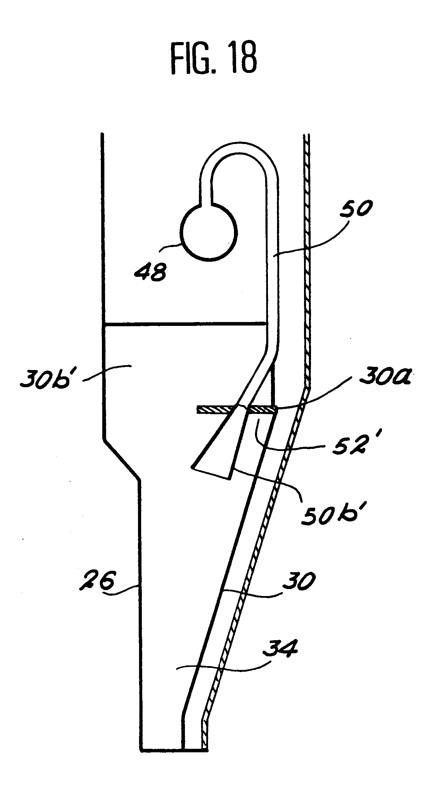

Sur la figure 18, on a représenté un autre mode de réalisation de la combinaison, décrite précédemment en se référant à la figure 14, des variantes de réalisation des figures 3, 5 et 6.

En effet, dans le cas de la figure 18, une plaque horizontale 52′ réduit la section de passage de l'espace d'alimentation 34 au niveau du bord supérieur 30a de la jupe 30, l'extrémité inférieure de chacun des tubes d'alimentation 50 comporte un tronçon de plus grand diamètre 50b', et le bord supérieur de la jupe 30a comporte un prolongement vers le haut 30b'. Cependant, ces trois éléments sont réalisés d'une manière différente de celle qui a été décrite précédemment.

Ainsi, au lieu d'être fixée sur l'enveloppe intérieure 26, la plaque horizontale 52' est fixée de façon étanche au bord supérieur 30a de la jupe 30. Par ailleurs, elle s'étend sur toute la longueur circonférentielle de l'espace d'alimentation 34, c'est-à-dire approximativement sur un demi-cercle. La plaque 52' a une largeur uniforme, au plus égale à environ la moitié de la largeur de l'espace 34 au niveau du bord supérieur 30a.

Comme dans le premier mode de réalisation décrit, la plaque 52' réduit la section de passage de l'espace d'alimentation 34 au niveau du bord 30a, ce qui a pour effet d'éviter le retour vers le haut de l'eau alimentaire.

Les tubes 50 descendant plus bas que la plaque 52', ils traversent cette dernière de façon étanche.

Le tronçon de plus grand diamètre 50b' terminant chacun des tubes 50 est situé immédiatement en dessous de la plaque 52' et présente dans ce cas une forme conique faisant passer d'une section circulaire dont le diamètre est celui des tubes 50 en amont, à une section elliptique qui peut être quadruple de la section circulaire.

L'augmentation régulière du diamètre des tubes 50 jusqu'à leur extrémité, et le passage à une section elliptique ont pour effet de réduire de façon très sensible les remontées de l'eau alimentaire dans l'espace 34.

En raison de la fixation de la plaque horizontale 52' sur la jupe 30, le prolongement vers le haut 30b' de cette dernière est limité dans ce cas à un simple prolongement des parties radiales de la jupe 30, par lesquelles cette dernière est raccordée sur l'enveloppe intérieure 26. Ce prolongement 30b' est soudé de façon étanche sur cette dernière enveloppe et remonte avantageusement à un niveau légèrement supérieur à celui de la jonction entre la partie intermédiaire tronconique et la partie supérieure de plus grand diamètre de l'enveloppe extérieure 10 du générateur de vapeur.

Comme l'illustre la figure 18, les trois variantes de réalisation des figures 3, 5 et 6 ainsi modifiées sont avantageusement combinées.

Grâce aux différentes variantes de réalisation de l'invention, qu'elles soient ou non combinées, le retour de l'eau alimentaire au-dessus du bord supérieur de la jupe 30 est empêché, de sorte que le rendement thermique du générateur est accru.

L'invention s'applique à tout générateur de vapeur dans lequel l'eau alimentaire alimente un économiseur par des tubes approximativement verticaux.

## Revendications

1. Générateur de vapeur comportant une enveloppe extérieure de révolution (10), d'axe vertical, délimitant un espace intérieur divisé en une zone inférieure primaire et une zone supérieure secondaire par une plaque à tubes horizontale (12), une cloison verticale (14) divisant la zone inférieure primaire en un collecteur d'admission (16) et un collecteur d'évacuation (18) de fluide primaire, un faisceau de tubes en U renversés (24) placés dans la zone supérieure secondaire et raccordés sur la plaque à tubes de telle sorte que leurs extrémités débouchent respectivement dans les collecteurs d'admission et d'évacuation, une enveloppe intérieure (26) coiffant le faisceau de tubes et dont un bord inférieur est éloigné de la plaque à tubes, une jupe (30) entourant une partie de l'enveloppe intérieure située à la verticale du collecteur d'évacuation, de façon à délimiter avec l'enveloppe intérieure un espace d'alimentation (34) en eau secondaire, ouvert vers le haut et communiquant à sa base avec un espace intérieur (27) à l'enveloppe intérieure, cet espace intérieur communiquant avec une partie haute de la zone supérieure secondaire par des séparateurs eau-vapeur (28) traversant une paroi supérieure de l'enveloppe intérieure, un dispositif d'alimentation en eau secondaire comportant des tubes d'alimentation (50) débouchant en haut de l'espace d'alimentation, et un dispositif d'évacuation de vapeur secondaire traversant une paroi supérieure de l'enveloppe intérieure, caractérisé par le fait qu'il comprend des moyens anti-retour (52,50a,50b,30b) évitant que l'eau secondaire débouchant des tubes d'alimentation (50) ressorte de l'espace d'alimentation (34) au-dessus de la jupe (30).

2. Générateur de vapeur selon la revendication 1, caractérisé par le fait que les moyens anti-retour comprennent une plaque (52) montée approximativement au niveau d'un bord supérieur (30a) de la jupe (30), de façon à réduire à ce niveau la section de passage dudit espace d'alimentation (34) en eau secondaire.

3. Générateur de vapeur selon la revendication 2, caractérisé par le fait que ladite plaque (52) obture au plus approximativement la moitié de la section de passage, au niveau du bord supérieur (30a) de la jupe.

4. Générateur de vapeur selon l'une quelconque des revendications 2 et 3, caractérisé par le fait que ladite plaque (52) est fixée sur l'enveloppe intérieure (26), en face de la jupe (30).

**5.** Générateur de vapeur selon l'une quelconque des revendications 2 et 3, caractérisé par le fait que ladite plaque (52′) est fixée sur la jupe (30), en face de l'enveloppe intérieure (26), et traversée de façon étanche par les tubes d'alimentation (50).

**6.** Générateur de vapeur selon l'une quelconque des revendications 1 à 5, caractérisé par le fait que les moyens anti-retour comprennent un prolongement (50a) de chacun des tubes d'alimentation (50), débouchant à un niveau sensiblement inférieur au niveau du bord supérieur (30a) de la jupe.

**7.** Générateur de vapeur selon l'une quelconque des revendications 1 à 6, caractérisé par le fait que les moyens anti-retour comprennent un tronçon d'extrémité (50b) terminant chacun des tubes d'alimentation (50), et de plus grande section par rapport à une partie amont de ces tubes.

**8.** Générateur de vapeur selon la revendication 7, caractérisé par le fait que la section des tronçons d'extrémité (50b) est approximativement double de celle des parties amont des tubes (50).

**9.** Générateur de vapeur selon la revendication 7, caractérisé par le fait que les tronçons d'extrémité (50b′) ont une forme conique et font passer d'une section circulaire à une section elliptique.

**10.** Générateur de vapeur selon la revendication 9, caractérisé par le fait que la section elliptique est égale à environ quatre fois la section circulaire.

**11.** Générateur de vapeur selon l'une quelconque des revendications 1 à 10, caractérisé par le fait que les moyens anti-retour comprennent un prolongement (30b) de la jupe vers le haut jusqu'à un niveau sensiblement supérieur à l'extrémité inférieure des tubes (50).

**12.** Générateur de vapeur selon la revendication 11, caractérisé par le fait que, la jupe (30) comportant deux parties radiales par lesquelles elle est raccordée sur l'enveloppe intérieure (26), seules ces parties radiales comportent un prolongement (30b′).

**Claims**

**1.** Steam generator having an external, vertically axed envelope of revolution (10), which defines an internal space subdivided into a primary lower zone and a secondary upper zone by a plate (12) having horizontal tubes, a vertical partition (14) subdividing the primary lower zone into a primary fluid supply collector (16) and discharge collector (18) a group of inverted U-tubes (24) placed in the secondary upper zone and connected to the tube plate in such a way that their ends issue respectively into the supply and discharge collectors, an inner envelope (26) covering the group of tubes and whereof a lower edge is remote from the tube plate, a skirt (30) surrounding part of the inner envelope positioned vertically of the discharge collector, in such a way as to define with the inner envelope a secondary water supply space (34), which is open to the top and communicates at its bottom with a space (27) within the inner envelope, said inner space communicating with an upper part of the secondary upper zone by water-steam separators (28) traversing an upper wall of the inner envelope, a secondary water feed device having feed tubes (50) issuing at the top of the feed space and a secondary steam discharge device traversing an upper wall of the inner envelope, characterized in that said steam generator comprises return-preventing means (52,50a,50b, 30b) preventing the secondary water issuing from the feed tubes (50) from passing out of the feed space (34) above the skirt (30).

**2.** Steam generator according to claim 1, characterized in that the return-preventing means incorporate a plate (52) mounted approximately level with the upper edge (30a) of skirt (30), so as to reduce at this level the secondary water feed space (34) passage cross-section.

**3.** Steam generator according to claim 2, characterized in that the plate (52) seals at the most approximately half the passage cross-section at the upper edge (30a) of the skirt.

**4.** Steam generator according to claim 2 or 3, characterized in that the plate (52) is fixed to the inner envelope (26) facing skirt (30).

**5.** Steam generator according to claim 2 or 3, characterized in that the plate (52′) is fixed to the skirt (30) facing the inner envelope (26) and is tightly traversed by the feed tubes (50).

**6.** Steam generator according to any one of the claim 1 to 5, characterized in that the return-preventing means have an extension (50a) for each of the feed tubes (50) issuing at a level substantially below the level of the upper edge (30a) of the skirt.

**7.** Steam generator according to any one of the claim 1 to 6, characterized in that the return-preventing means incorporate an end section (50b) terminating each of the feed tubes (50) and having a larger cross-section compared with an upstream part of said tubes.

8. Steam generator according to claim 7, characterized in that the cross-section of the end sections (50b) is approximately double that of the upstream parts of the tubes (50).

9. Steam generator according to claim 7, characterized in that the end sections (50b') have a conical shape and pass from a circular cross-section to an elliptical cross-section.

10. Steam generator according to claim 9, characterized in that the elliptical cross-section is approximately equal to four times the circular cross-section.

11. Steam generator according to any one of the claims 1 to 10, characterized in that the return-preventing means incorporate an upward extension (30b) of the skirt to a level significantly above the lower end of tubes (50).

12. Steam generator according to claim 11, characterized in that the skirt (30) has two radial parts by which it is connected to the inner envelope (26), only these radial parts having an extension (30b').

**Patentansprüche**

1. Dampferzeuger mit einer äußeren Drehhüle (10) mit Vertikalachse, die einen inneren Raum begrenzt, der in eine untere erste Zone und eine obere zweite Zone durch eine horizontale Platte mit Rohren (12) aufgeteilt ist, einer vertikalen Trennwand (14), die die untere erste Zone in einen Zugangssammler (16) und einen Ausbringsammler (18) von Primärfluid aufteilt, mit einem Bündel von Rohren in umgedrehter U-Form (24), die in der oberen zweiten Zone plaziert sind und mit der Rohrplatte verbunden sind, derart, daß deren Enden entsprechend in den Zugangs- und Ausbringsammlern münden, einer inneren Hülle (26), die das Rohrbündel umgibt und von der ein unterer Rand von der Rohrplatte entfernt ist, einem Mantel (30), der einen Bereich der unteren Hülle umgibt, der in der Vertikalen des Ausbringsammlers angeordnet ist, derart, daß er mit der inneren Hülle einen Zufuhrraum (34) von zweitem Wasser begrenzt, der nach oben offen ist und an seiner Basis mit einem Innenraum (27) mit der unteren Hülle in Verbindung steht, wobei der innere Raum mit einem oberen Bereich der oberen zweiten Zone durch Wasser-Dampf-Abscheider (28) in Verbindung steht, die eine obere Seitenwand der unteren Hülle durchqueren, einer Zuführvorrichtung von zweitem Wasser mit Zufuhrrohren (50), die oben in den Zufuhrraum münden, und einer Ausbringvorrichtung von zweiten Dampf, die eine obere Seitenwand der inneren Hülle durchquert, und dadurch gekennzeichnet, daß er Rücklaufverhinderungseinrichtungen (52,50a, 50b,30b) aufweist, die verhindern, daß zweites Wasser, das in die Zufuhrrohre (50) mündet, oberhalb des Mantels (30) aus dem Zufuhrraum (34) wieder austritt.

2. Dampferzeuger nach Anspruch 1, dadurch gekennzeichnet, daß die Rücklaufverhinderungseinrichtungen eine Platte (52) aufweisen, die ungefähr auf der Höhe eines oberen Randes (30a) des Mantels (30) angebracht ist, derart, daß sie auf diesem Niveau den Querschnitt des Kanals des Zufuhrraums (34) von zweitem Wasser verringert.

3. Dampferzeuger nach Anspruch 2, dadurch gekennzeichnet, daß die Platte (52) ungefähr höchstens die Hälfte des Kanalquerschnitts auf dem Niveau des oberen Randes (30a) des Mantels abdeckt.

4. Dampferzeuger nach Anspruch 2 oder 3, dadurch gekennzeichnet, daß die Platte (52) an der inneren Hülle (26) gegenüber dem Mantel (30) befestigt ist.

5. Dampferzeuger nach einem der Ansprüche 2 oder 3, dadurch gekennzeichnet, daß die Platte (52') an dem Mantel (30) gegenüber der inneren Hülle (26) befestigt ist und auf abdichtende Weise von den Zufuhrrohren (50) durchsetzt ist.

6. Dampferzeuger nach einem der Ansprüche 1 bis 5, dadurch gekennzeichnet, daß die Rücklaufverhinderungseinrichtungen eine Verlängerung (50a) eines jeden der Zufuhrrohre (50) aufweisen, die einem dem Niveau im wesentlichen unterhalb des oberen Randniveau (30a) des Mantels münden.

7. Dampferzeuger nach einem der Ansprüche 1 bis 6, dadurch gekennzeichnet, daß die Rücklaufverhinderungseinrichtungen ein Endstück (50b) aufweisen, das jedes der Zufuhrrohe (50) beendet und von größerem Querschnitt ist bezogen auf einen stromaufwärtigen Bereich dieser Rohre.

8. Dampferzeuger nach Anspruch 7, dadurch gekennzeichnet, daß der Querschnitt der Endstücke (50b) annähernd doppelt so groß ist wie jener der Bereiche stromauf der Rohre (50).

9.  Dampferzeuger nach Anspruch 7, dadurch gekennzeichnet, daß die Endstücke (50b') eine konische Form aufweisen und von einer Kreisquerschnittsform zu einer elliptischen Querschnittsform übergehen.

10. Dampferzeuger in Anspruch 9, dadurch gekennzeichnet, daß der elliptische Querschnitt ungefähr gleich vier mal so groß ist wie der kreisförmige Querschnitt.

11. Dampferzeuger nach einem der Ansprüche 1 bis 10, dadurch gekennzeichnet, daß die Rücklaufverhinderungseinrichtungen eine Verlängerung (30b) des Mantels nach oben bis auf ein Niveau im wesentlichen oberhalb des unteren Endes der Rohre (50) aufweisen.

12. Dampferzeuger nach Anspruch 11, dadurch gekennzeichnet, daß da der Mantel (30) zwei radiale Bereiche aufweist, durch die er mit der inneren Hülle (26) verbunden ist, nur diese radialen Bereiche eine Verlängerung (30b') aufweisen.

FIG. 1

FIG. 2

FIG. 3

48
50
52
30a
26a
26
10
34
30

FIG. 4

48
50
30a
26a
50a
26
10
34
30

FIG. 5

48
50
50b
30a
26
10
34
30

FIG. 6

48
50
30a
30b
26
10
34
30

FIG. 7

FIG. 8

FIG. 9

FIG. 10

FIG. 11

48
50
30b
50a
10
30

FIG. 12

48
50
50b
30a
30b
10
30

FIG. 13

48
50
52
30b
50a
26
10
30

FIG. 14

48
50
50b
52
30b
26
10
30

FIG. 15

FIG. 16

FIG. 17

14

# FIG. 18